# EUROPÄISCHE PATENTSCHRIFT

(11) **EP 0 987 370 B1**
(45) Veröffentlichungstag und Bekanntmachung des Hinweises auf die Patenterteilung: **25.10.2006**
(21) Anmeldenummer: 99115677.9
(22) Anmeldetag: 09.08.1999
(51) Int. Cl.: E01B 25/00

(54) **Herstellungsverfahren der lagegenauen Verbindungen von Statoren an einer Magnetschwebebahn und deren Tragkonstruktion**
Method for the precise positioning and fixing of stators of a track for a maglev vehicle as well as its supporting structure
Méthode précise de positionnement et de connection des stators d'une voie pour véhicule à lévitation magnétique et sa structure de support

(30) Priorität: 14.09.1998 DE 19841936
(43) Veröffentlichungstag der Anmeldung: 22.03.2000
(60) Teilanmeldung: 06120438.4
(73) Patentinhaber: Max Bögl Bauunternehmung GmbH & Co. KG, 92301 Neumarkt (DE)
(72) Erfinder: Reichel, Dieter, 92318 Neumarkt (DE)
(74) Vertreter: Bergmeier, Werner

(56) Entgegenhaltungen:
- EP-A- 0 151 283
- DE-A- 4 115 936
- DE-C- 3 825 508
- DE-C- 3 924 486

## Beschreibung

Die vorliegende Erfindung betrifft ein Verfahren zum Herstellen einer lagegenauen Verbindung an einem Fahrweg für ein spurgebundenes Fahrzeug, insbesondere eine Magnetschwebebahn, sowie einem Fahrweg gemäß den Oberbegriffen der Ansprüche 1 und 8.

Derartige Fahrwege werden meist als Hochbahnen ausgeführt. Hochbahnen weisen üblicherweise im Abstand zueinander angeordnete Träger auf, zwischen denen den Fahrweg aufnehmende Platten angeordnet sind, die von Träger zu Träger reichen. Die Träger nehmen sowohl die statischen, als auch die dynamischen Kräfte auf und müssen deshalb zunächst der Größe der aufzunehmenden Lasten entsprechenden dimensioniert werden. Da die Träger in vielen Fällen, insbesondere bei Magnetschnellbahnen zudem noch Funktionsteile derselben aufnehmen, die funktionsbedingt nur geringe Lageabweichungen zulassen, ist es zur Einhaltung dieser relativ engen Toleranzen sehr schwierig, die Träger zusammen mit den Tragelementen für die Funktionsteile in einem Zug herzustellen.

Nachdem solche Bahnen zudem für eine relativ lange Betriebsdauer erstellt werden, ist es aufgrund der Schwind- und Kriechvorgänge, sowohl im Fundament, als auch im eigentlichen Bauwerk äußerst schwer, die relativ geringen Toleranzen für die gesamte Betriebsdauer einer Bahn einzuhalten oder zu gewährleisten.

Aus der EP 0 410 153 A1 ist eine Tragkonstruktion für den Fahrweg eines spurgebundenen Fahrzeugs bekannt. Die erforderlichen Träger sind dabei je nach Ausführungsbeispiel entweder in Stahl- oder in Betonbauweise hergestellt. Ausrüstungsteile werden dabei lagegenau an dem Träger befestigt. Hierzu wird in dieser Anmeldung vorgeschlagen, daß an dem Träger Anschlusskörper angeordnet sind, die erste Anschlagflächen aufweisen. Diese ersten Anschlagflächen korrespondieren mit zweiten Anschlagflächen, die an mit dem Ausrüstungsteil verbundenen Traversen angeordnet sind. Nachdem die Ansätze mit den ersten Anschlagflächen an dem Träger befestigt wurden, werden diese ersten Anschlagflächen spanabhebend bearbeitet, so daß die geforderten Toleranzen für die Anbringung der Ausrüstungsteile beim Zusammenwirken mit der zweiten Anschlagfläche des Befestigungsmittels der Ausrüstungsteile eingehalten werden. Die Bearbeitung der Anschlagflächen soll dabei vorzugsweise in einer klimatisierten Fabrikhalle unter kontrollierten Bedingungen durchgeführt werden. Nachteilig bei dieser Verfahrensweise ist es, daß die Bearbeitung der Anschlagflächen hierdurch zwar möglicherweise richtig in Bezug auf den Träger erfolgt. Nach Aufbau des Trägers an der Baustelle sind jedoch insbesondere bei Verwendung von vorgefertigten Stahlbetonträgern weitere Toleranzen zu erwarten. Diese Toleranzen entstehen durch das Aneinanderreihen der einzelnen Stahlbetonträger. Entsteht beim Aufstellen dieser Stahlbetonträger ein vertikaler oder horizontaler Versatz, so sind auch die zuvor exakt bearbeiteten Anschlagflächen nicht mehr innerhalb der geforderten Toleranzen in Bezug auf die komplette Fahrbahn. Dieses Problem wurde bei der EP 0 410 153 A1 nicht erkannt.

In der DE 41 15 936 A1 ist ein Träger für einen Fahrweg für Magnetschwebefahrzeuge offenbart. An dem Träger sind zu Funktionsmoduln zusammengefasste Ausrüstungsteile angeordnet. Die Funktionsmoduln sind kraft- und/oder formschlüssig mit Querträger an dem Träger befestigt. Bearbeitungsflächen zur Herstellung einer lagegenauen Verbindung vor Ort sind in der DE 41 15 936 A1 nicht gezeigt, die Verbindung der Anbauteile mit dem Träger erfolgt auch in der DE 41 15 936 A1 in bekannter Weise über justierbare Elemente. Eine Konsole mit wenigstens einem Steg, einer Kopfplatte und einer Fußplatte ist in der DE 41 15 936 A1nicht beschrieben. Ein Hinweis darauf, wie eine genaue Festlegung der Funktionsmoduln in Bezug auf die Fahrbahn und nicht nur in Bezug auf den einzelnen Träger zu erlangen ist, kann in dieser Druckschrift nicht gefunden werden.

Aufgabe der vorliegenden Erfindung ist es daher, eine Möglichkeit zu schaffen, um beim Bau eines entsprechenden Fahrweges die geforderten Toleranzen nicht nur in Bezug auf den Träger, sondern in Bezug auf die komplette Fahrbahn einhalten zu können.

Die Aufgabe wird durch ein Verfahren gemäß den Merkmalen des Patentanspruchs 1 sowie durch einen entsprechenden Fahrweg mit den Merkmalen des Anspruches 8 gelöst.

Bei dem erfindungsgemäßen Verfahren werden mehrere Trägerelemente zur Bildung des Fahrweges vor Ort im wesentlichen positionsgerecht in Bezug auf die komplette Fahrbahn aufgestellt. Zur Verbindung der Träger mit Anbauteilen zum Führen des Fahrzeugs werden mit Kopf- und Fußplatten versehenen Konsolen zwischen Träger und Anbauteil angeordnet. Die Verbindungsstellen zwischen Träger und Konsole und/ oder zwischen Konsole und Anbauteil werden vermessen und das geforderte Maß hergestellt. Dies erfolgt erfindungsgemäß dadurch, daß das Material an der Verbindungsstelle zwischen Träger und Anbauteil abgetragen oder aufgebaut wird und erst anschließend, wenn das erforderliche Maß erreicht wurde, das Anbauteil montiert wird. Hierdurch wird eine feste und stabile Verbindungsstelle geschaffen, welche maßgerecht mit für den sicheren Betrieb der Magnetschwebebahn erforderlichen geringen Toleranzen erhalten wird. Der besondere Vorteil dieser Erfindung besteht auch darin, daß die Verbindungsstelle vor Ort auf das richtige Maß gebracht wird. Es werden hierdurch die Anforderungen beim Absetzen und Aufstellen der Träger geringer gehalten. Bei Trägern, welche bei modernen Fahrwegen aus schweren Stahlbetonhohlraumträgern in Fertigbauweise hergestellt sind, ist das exakte Aufstellen schwieriger, als die exakte Herstellung der Verbindungsstelle. Darüber hinaus wird der Vorteil erreicht, daß auch an die Stöße verschiedener Träger geringere Anforderungen gestellt werden müssen, da ein gewisser Versatz der einzelnen Träger zueinander durch ein entsprechendes Korrigieren des Maßes durch Abtragen oder Aufbauen von Material an der Verbindungsstelle behoben wird. Es wird mit der Erfindung somit gewährleistet, daß nicht nur innerhalb eines Trägers die Verbindungsstellen maßgenau hergestellt sind, sondern daß darüber hinaus die maßgenaue Herstellung von den Verbindungsstellen über den gesamten Fahrweg möglich ist.

Besonders vorteilhaft ist es, wenn die Vermessung oder Bearbeitung der Verbindungsstellen mittels eines spurgebundenen Fahrzeugs durchgeführt wird. Das spurgebundene Fahrzeug wird dabei entlang des Trägers geführt und bewirkt dadurch eine lagegenaue Vermessung und Bearbeitung der Verbindungsstelle.

Besonders vorteilhaft ist es, wenn die Verbindungsstelle an einer mit dem Träger verbundenen Konsole vorgesehen wird. Die Konsole ist hierbei vorteilhaft gestaltbar, so daß sie für die Vermessung der Verbindungsstelle und die Bearbeitung dieser Verbindungsstelle besonders gut geeignet ist. Auch ist die Materialauswahl hierdurch unabhängig von den Eigenschaften, welche der Träger erfüllen muß, so zu wählen, daß die Bearbeitung und Verbindung mit dem Anbauteil optimal erfolgt.

Bei einer entsprechenden Gestaltung der Konsole kann die Verbindungsstelle für das Anbauteil an der Konsole vor und/oder nach dem Anbau an dem Träger mechanisch bearbeitet werden. Dies erlaubt beispielsweise eine erste Vorbearbeitung, ein anschließendes Anbauen der Konsole an den Träger und eine gegebenenfalls erforderliche Nachbearbeitung der Verbindungsstelle.

Üblicherweise wird das Material spanend abgetragen, das bedeutet, daß durch Fräsen oder Bohren die entsprechenden Verbindungsstellen geschaffen werden. Es kann aber auch durch Laser oder andere Verfahren das Bearbeiten der Verbindungsstelle erfolgen.

Erforderlichenfalls kann bei einer entsprechenden Materialwahl der Konsole, bzw. der Verbindungsstelle an dem Träger Material aufgeschweißt werden. Hierdurch ist ein gegebenenfalls vorhandenes Untermaß zu beheben.

Ein zusätzliches Material kann bei einem Untermaß an der Befestigungsstelle als Abstandsstück angeordnet werden. Es eignen sich hier insbesondere Scheiben oder Distanzplatten. Dieses zusätzliche Material kann beispielsweise an der Verbindungsstelle angeschweißt werden und anschließend auf das erforderliche Maß wieder abgetragen werden.

Wird die Vermessung und Bearbeitung nach Beendigung des Verformungsvorganges, insbesondere von Kriech- und Schwindvorgängen durchgeführt, so wird eine auf Dauer weitgehend anhaltende entsprechend korrekte Einhaltung des Sollmaßes mit den zulässigen Toleranzen erhalten, da sich das Material nicht mehr wesentlich verändert, Auch dies ist ein besonderer Vorteil der vorliegenden Erfindung, da gemäß dem Stand der Technik bei einer Bearbeitung der entsprechenden Verbindungsstellen unmittelbar nach der Fertigung in den Hallen besonders bei Betonarbeiten mit weiteren Verformungen zu rechnen ist. Diese Veränderungen sind erst nach mehreren Wochen weitgehend abgeklungen, so daß der zwischen Fertigung und Verbauung des Trägers üblicherweise bestehende Zeitraum für den Transport und Lagerung des Trägers vorteilhaft ist und nach der Verbauung des Trägers diese Vorgänge weitgehend beendet sind.

Die Vermessung der Verbindungsstelle geschieht ausgehend von Referenzpunkten, -linien oder -ebenen. Dies gewährleistet, daß die erforderlichen Maße richtig eingehalten werden. An den Referenzpunkten, -linien oder - ebenen orientiert sich gemäß einer Ausführung das spurgebundene Fahrzeug, um die Vermessung vorzunehmen.

Eine erfindungsgemäßer Fahrweg mit einem aus mehreren Elementen betstehenden Träger weist eine Konsole zur Verbindung eines Trägers mit wenigstens einem an dem Träger mittels der Konsole befestigten Anbauteil zum Führen des Fahrzeugs auf. Die Konsole weist wenigstens einen Steg auf, der an seinem ersten Ende eine Fußplatte zur Verbindung mit dem Träger und an seinem zweiten Ende eine im wesentlichen senkrecht zur Erstreckung des Steges angeordnete Kopfplatte zur Verbindung mit dem Anbauteil auf. An zumindest einer der Verbindungsstellen zwischen Träger und Anbauteil sind Bearbeitungsflächen zum Herstellen einer lagegenauen Verbindung vor Ort vorgesehen. Ein erfindungsgemäßer Fahrweg ist somit besonders vorteilhaft für eine Bearbeitung der Verbindungsstelle zwischen Konsole und Anbauteil und/ oder zwischen Träger und Konsole bzw. Anbauteil geeignet. Während bei bekannten Anordnungen die Träger für den Fahrweg mit den Tragelementen für die Funktionsteile einstückig ausgebildet sind und sich daher Lageveränderungen der Träger unmittelbar auf die Lage der Tragelemente für die Funktionsteile auswirken und somit nicht mehr korrigierbar sind, geht die Erfindung vom Gedanken einer Trennung der Träger für den Fahrweg von den Tragelementen für die Funktionsteile aus. Sie sieht eine zwischen diesen anzuordnende Konsole vor, welche mit den Tragelementen für die Funktionsteile und mit dem Träger für den Fahrweg verbindbar ist.

Nachdem das Verbinden der Konsolen mit den Trägem und auch das Anbringen der Tragelemente an den Konsolen nach dem Aushärten des Betons und somit nach dem durch das Aushärten bedingten Schwinden des Betons erfolgen kann, wird die durch das Schwinden des Betons hervorgerufene Lageveränderung durch die Erfindung vermieden. Da durch die Erfindung zumindest eine Möglichkeit zur nachträglichen Korrektur der Relativlage zwischen dem jeweiligen Träger für den Fahrweg einerseits und den Tragelementen für die Funktionsteile andererseits geschaffen ist, steht für die Dimensionierung der Träger nicht mehr deren Formstabilität und Einhaltung der geforderten engen Toleranzen, sondern die statische Festigkeit des Trägerquerschnittes im Vordergrund.

Ferner werden die aus dem Fahrbetrieb und/oder durch Temperaturschwankungen entstehenden Kräfte unmittelbar in die Träger eingeleitet, ohne sich auf die Relativlage zwischen den Konsolen und den Tragelementen auszuwirken.

Die erfindungsgemäße Lösung bietet aufgrund ihres modularen Aufbaus den weiteren Vorteil, daß die Konsolen und auch die Tragelemente wahlweise vor und auch nach ihrem Anbau mechanisch bearbeitet werden können. Selbst hohe Toleranzanforderungen lassen sich hierdurch in allen Raumachsen relativ leicht erfüllen. Auch ermöglicht der modulare Aufbau neben exakter und kostengünstiger Fertigung einen einfachen Austausch von beispielsweise durch Unfälle beschädigte Tragelemente für die Funktionsteile.

Schließlich läßt sich die für die Funktionsebene geforderte Raumkurve durch entsprechende Gestaltung und/oder Bearbeitung der Konsolenposten günstig verwirklichen.

Um besonders große Lageveränderungen ausgleichen zu können, können unterschiedliche Konsolen vorgesehen sein, welche Stege mit unterschiedlicher Länge aufweisen. Hierdurch kann bei einem sehr großen Versatz des Trägers aus seiner Solllage eine vergrößerte Konsole eingesetzt werden, welche das Anbauteil schließlich in der gewünschten Position befestigt. Um eine besonders hohe Stabilität der Konsole zu erreichen, kann vorgesehen sein, daß die Stege an ihrem ersten und/oder ihrem zweiten Ende miteinander verbunden sind. Die Verbindung schafft eine besondere Stabilität hinsichtlich mechanischer Beanspruchung der Stege, beispielsweise bei der Verbindung mit dem Anbauteil.

Besonders vorteilhaft ist es, wenn an jedem Steg eine separate Kopfplatte angeordnet ist. Der Vorteil besteht insbesondere darin, daß bei Stößen der in Ihren Längen begrenzten Anbauteilen ein besserer Ausgleich bei der Ausrichtung erfolgen kann. Die separaten Anlageflächen der unterschiedlichen Kopfplatten können dabei auch unterschiedlich bearbeitet werden. Außerdem ist eine Längendehnung, welche durch Temperatureinflüsse auf die Anbauteile erfolgt, besser kompensierbar, wenn jeweils an einem Steg eine Kopfplatte angeordnet ist.

Weist die Kopfplatte Vorsprünge als Anlagefläche auf, so ist die Bearbeitung der Kopfplatte besonders einfach möglich. Die Bearbeitungsfläche ist dabei speziell für eine mechanische Bearbeitung gestaltet.

Als besonders vorteilhaft hat sich erwiesen, daß die Kopfplatte im wesentlichen rechtwinklig zum Steg angeordnet ist. Hierdurch wird eine besonders gute Krafteinleitung ermöglicht. Außerdem ist die Bearbeitung einfach möglich. Auch die Montage der Anbauteile an der Kopfplatte bzw. der Konsole ist hierdurch erleichtert, da die Zugänglichkeit verbessert ist.

Als besonders vorteilhafte Formen für die Verbindung von Kopfplatte mit den Stegen haben sich L-, T- oder U-förmige Gestaltungen herausgestellt. Hierdurch ist eine besonders gute Anordnung der Anbauteile an der Kopfplatte bei gleichzeitiger guter Stabilität oder Ausgleichung von Temperatur-Längenänderungen möglich.

Zu einer besonders stabilen Befestigung der Anbauteile weist der Steg und/oder die Kopfplatte Bohrungen oder Gewinde zur Aufnahme von Befestigungsschrauben und/oder Querkraftbolzen auf. Mit Hilfe dieser Befestigungsschrauben und Querkraftbolzen ist eine zuverlässige Befestigung der Anbauteile an der Konsole ermöglicht.

Um eine spätere Bearbeitung sowohl spanend als auch auftragend zu ermöglichen, ist vorteilhafterweise vorgesehen, daß das Material der Stege und/oder der Kopfplatten spanbares und/oder schweißbares Metall, insbesondere Stahl oder Guß ist. Insbesondere bei einem Gußteil sind besonders funktionsgerechte Gestaltungen der Konsole ermöglicht.

Um eine stabile Verbindung von der Konsole mit dem Träger zu erhalten ist vorteilhafterweise vorgesehen, daß an der Konsole Zuganker angeordnet sind, welche in den Träger einbetoniert sind. Hierdurch ist eine sichere Befestigung der Konsole in dem Träger möglich.

Um die entsprechenden Materialanforderungen besonders günstig umzusetzen, ist in einer besonders vorteilhaften Ausführung vorgesehen, daß die Konsole aus Guß und der Zuganker zumindest teilweise aus Stahl ist, und daß der Zuganker und die Konsole miteinander verschweißt sind. Hierdurch werden die Belastungen, welche von den einzelnen Teilen gefordert werden, besonders günstig in den gewählten Materialien umgesetzt.

Während die einbetonierten Konsolen während der Herstellung des Trägers üblicherweise bereits eingebaut werden müssen, ist in einer alternativen Ausführung vorgesehen, daß die Konsole an dem Träger, insbesondere an einem in dem Träger angeordneten Zuganker angeschraubt ist. Der Zuganker kann dabei in dem Träger einbetoniert sein oder sich in einem Leerrohr befinden und damit jeweils zwei Konsolen beidseitig des Trägers mit mindestens einem Zuganker zu einer Baueinheit zusammenfassen. Hier wird eine besonders einfache Gestaltung erhalten, welche sowohl bei der Montage als auch bei einer evtl. erforderlichen Demontage sehr einfach zu handhaben ist. Als Zuganker eignet sich in diesem Fall insbesondere eine Gewindestange, welche quer durch den Träger von einer Konsole bis zur gegenüberliegenden Konsole reicht.

Eine weitere Stabilität der Konsole wird dadurch erhalten, daß die Stege an ihrem ersten Ende mit wenigstens einer Fußplatte versehen sind. Weist die Fußplatte Bohrungen, insbesondere Zentrierbohrungen zur Befestigung an dem Zuganker auf, so ist ein Anbau und ein Austausch der Konsole auf einfache Weise möglich. Durch die Zentrierbohrungen wird dabei eine exakte Positionierung der Konsole erreicht. Die Fußplatte kann dabei entweder außerhalb des Trägers angeordnet sein und sich dabei an dem Träger abstützen. Sie kann aber auch in einer anderen Ausführungsform in den Träger einbetoniert sein und somit eine zusätzliche Verbindung zwischen Konsole und Träger schaffen.

Ist der Abstand zweier Konsolen in Längsrichtung des Fahrweges im wesentlichen ein ganzzahliger Teil der Länge des Anbauteiles, so wird in vorteilhafter Weise eine Konsole am Stoß zwischen zwei Anbauteilen angeordnet. Diese eine Konsole verbindet damit in zuverlässiger Weise die beiden Anbauteile mit dem Träger. Außerdem ist durch die Stegausführung der Konsole eine Längendehnung der Anbauteile, welche durch Temperatureinflüsse nicht vermeidbar ist, einfach zu kompensieren, ohne daß es zu Verspannungen in der Lagerung des Anbauteiles kommt. Besonders vorteilhaft ist es dabei, wenn das erste Anbauteil mit dem ersten Steg bzw. der ersten Kopfplatte und das zweite Anbauteil mit dem zweiten Steg bzw. der zweiten Kopfplatte verbunden ist. Die beiden Stege bzw. Kopfplatten können dann die Wärmedehnungen durch eine relative Bewegung zueinander ausgleichen.

Als Gestaltung für das Anbauteil hat sich ein im Querschnitt im wesentlichen kastenförmiges Bauteil mit integrierter Aufsetzfläche, Seitenführungsfläche und Statorbefestigung erwiesen. Hierdurch ist eine hohe Montagefreundlichkeit beim Anbau der Funktionsteile an die Konsole bzw. den Träger gewährleistet.

Um eine besonders hohe Stabilität bei der Befestigung der Konsole an dem Träger zu erhalten, ist es besonders vorteilhaft, wenn der Träger aus Faserbeton hergestellt ist. Faserbeton bewirkt im vorliegenden Falle, daß auch in den Randbereichen des Trägers, an welchen die Konsole befestigt ist, eine hohe Festigkeit des Betons erhalten wird. Die Konsole muß somit nicht bis in den Bereich der üblichen Bewährung in den Träger eingebracht werden, um eine hohe Stabilität zu erhalten.

Weitere Vorteile und Ausführungen der Erfindung werden in den folgenden Figuren beschrieben. Es zeigt
- **Figur 1**: einen erfindungsgemäßen Fahrweg mit einer Magnetschwebebahn,
- **Figur 2**: einen Träger mit Konsolen,
- **Figur 3**: einen Querschnitt durch einen Träger im Bereich einer Konsole,
- **Figur 4**: eine Draufsicht auf einen Teil eines Trägers im Bereich einer Konsole,
- **Figur 5**: eine Konsole in perspektivischer Ansicht,
- **Figur 6**: eine skizzierte Bearbeitungsvorrichtung für die Konsolen,
- **Figur 7**: eine erfindungsgemäße Befestigung von Anbauteilen an Konsolen
- **Figur 8**: eine Gußkonsole in perspektivischer Ansicht,
- **Figur 9**: die Befestigung einer Konsole mittels Gewindestahl,
- **Figur 10**: die Befestigung einer Konsole in Explosionsdarstellung,
- **Figur 11**: die befestigte Konsole gemäß Figur 10,
- **Figur 12**: perspektivische Ansicht eines Ausschnitts eines Trägers mit befestigten Konsolen,
- **Figur 13+14**: alternative Ausführungen der Konsole,
- **Figur 15**: perspektivische Darstellung einer Verbindung eines Anbauteils mit einer Konsole.

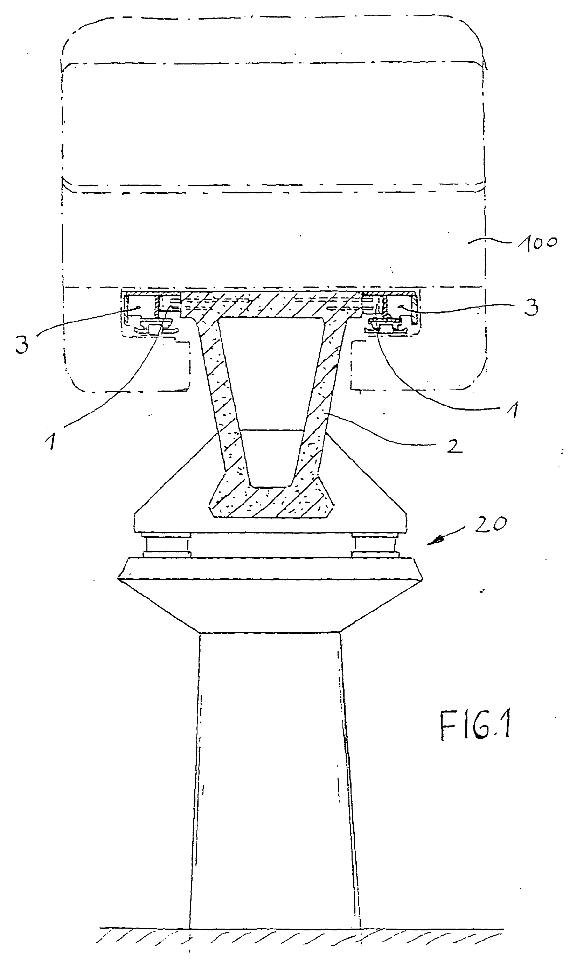

In Figur 1 ist eine Fahrbahn für eine Magnetschwebebahn 100 im Querschnitt dargestellt. Die Magnetschwebebahn 100 umgreift Anbauteile 3, welche seitlich an einem Träger 2 befestigt sind. Die Befestigung erfolgt mittels Konsolen 1, welche in dem Träger 2 einbetoniert sind. Der Träger 2 ist ein Betonfertigteil, welches an der Baustelle auf Stützen 20 befestigt wird. Um den ordnungsgemäßen Betrieb der Magnetschwebebahn 100 zu gewährleisten, ist es wichtig, daß die Anbauteile 3 in einer definierten Position zueinander und in Bezug auf den Träger 2 angeordnet sind. Erst diese relativ exakte Anordnung der Anbauteile 3 macht den Betrieb der Magnetschwebebahn mit extrem hohen Geschwindigkeiten zuverlässig möglich. Die Anbauteile weisen dabei Aufsetzflächen, Seitenführungsflächen und Storpakete bzw. deren Befestigungen auf, welche eine Führung der Magnetschwebebahn 100 sowie deren Antrieb ermöglichen.

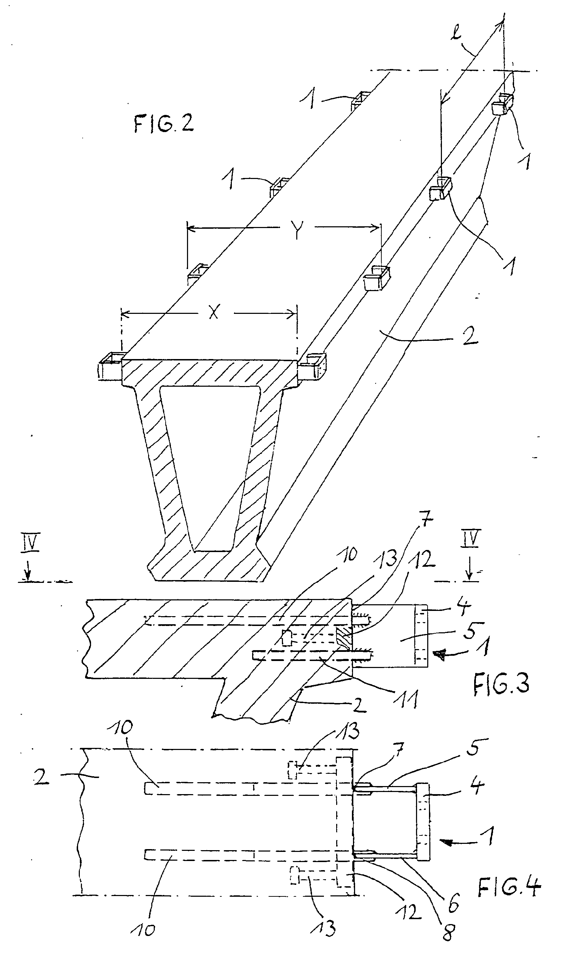

In Figur 2 ist ein Ausschnitt eines Trägers 2 in perspektivischer Ansicht dargestellt. An dem Träger 2 ist eine Vielzahl von Konsolen 1 angeordnet. Der Träger 2 ist als Hohlträger ausgebildet, um eine besonders hohe Stabilität zu erlangen. Hierdurch sind sehr große Spannweiten zu erzielen, wodurch die Herstellkosten eines dementsprechenden Fahrweges verringert werden können. Im Bereich des oberen Gurtes des Trägers 2 sind jeweils an dessen Ende die Konsolen 1 angeordnet. Sie sind in einem Abstand I voneinander in Längsrichtung des Trägers beabstandet. der Abstand I ist vorteilhafterweise so gewählt, daß sie ein ganzzahliger Teil der Läge eines Anbauteils 3 ist. Hierdurch wird sichergestellt, daß die Anbauteile, welche wesentlich kürzer als die Träger 2 sind, stets im Bereich einer Konsole gestoßen werden. Hierdurch ist eine exakte Verbindung und Zuordnung ohne zusätzlicher erforderlicher Bauteile möglich. Dies erleichtert den kostengünstigen Bau des Fahrweges, da keine separaten Verbindungsmittel für die Anbauteile erforderlich sind.

Der obere Gurt des Trägers 2 weist eine Breite x auf, welche geringer ist als die Breite y der Außenflächen der Konsolen. An den Außenflächen der Konsolen 1 werden die Anbauteile angebracht. Dementsprechend ist das Maß y wichtig für das geforderte Maß zur Anordnung der Anbauteile. Durch eine Veränderung des Maßes y wird der horizontale Abstand der Anbauteile verändert, der für die genaue Führung des Magnetschwebefahrzeuges sehr wichtig ist.

In Figur 3 ist ein Querschnitt des Trägers 2 im Bereich einer Konsole dargestellt. Die Konsole 1 ist dabei mittels Zuganker 10 und 11 in dem Beton des Trägers 2 eingelassen. Zwischen dem Zuganker 10 und dem Zuganker 11 ist an der Konsole 1 eine Knagge 12 vorgesehen ebenso wie die Zuganker mittels Schweißnähten an den Stirnseiten der Stegbleche 5 des nicht sichtbaren Stegbleches 6 befestigt ist. Die Knagge 12 ist an ihrer den Stegblechen 5, 6 gegenüberliegenden Seite mit zwei Kopfbolzen 13 versehen, die zu ihrer Befestigung im Beton des Trägers 2 dienen. Sie dient dazu, die aus der Belastung der Konsole 1 entstehenden Vertikalkräfte aufzunehmen und kann mit einer aufgeschweißten Zugverzahnung versehen sein. Die Knagge 12 kann auch unmittelbar an den freien Enden 7, 8 der Stegbleche 5, 6 der Konsole angeordnet sein und deren u-förmigen Querschnitt zu einem rechteckigen Querschnitt ergänzen.

Um die Zuganker 10, 11 in ihrem der Konsole 1 benachbarten Bereich gegen Korrosion zu schützen, können die Zuganker 10, 11 in diesem Bereich mit einem Korrosionsschutzmittel beschichtet sein.

Das von dem Träger 2 abgewandte Ende des Stegbleches 5 ist mit einer Kopfplatte 4 versehen. Diese Kopfplatte 4 dient, wie später noch beschrieben wird, bei der Befestigung der Anbauteile als Verbindungsstelle. Sie ist bei einer Stahlausführung ebenfalls an dem Stegblech 5 angeschweißt.

In Figur 4 ist eine Draufsicht auf einen Träger 2 und eine Konsole 1 gemäß Figur 3 dargestellt. Es ist hier ersichtlich, daß die Stegbleche 5 und 6 voneinander beabstandet sind und jeweils mit ihrem freien Ende 7, 8 mit einem Zugstab 10 bzw. einem darunter liegenden kürzerer Zugstab 11 verbunden sind. Die Stegbleche 5, 6 sorgen dabei für einen entsprechenden Abstand der Kopfplatte 4 von dem Träger 2. Es wird damit u.a. der Vorteil erreicht, daß die Montage der Anbauteile einfach erfolgt, da genügend Freiraum zum beispielsweise Festschrauben der Anbauteile vorhanden ist.

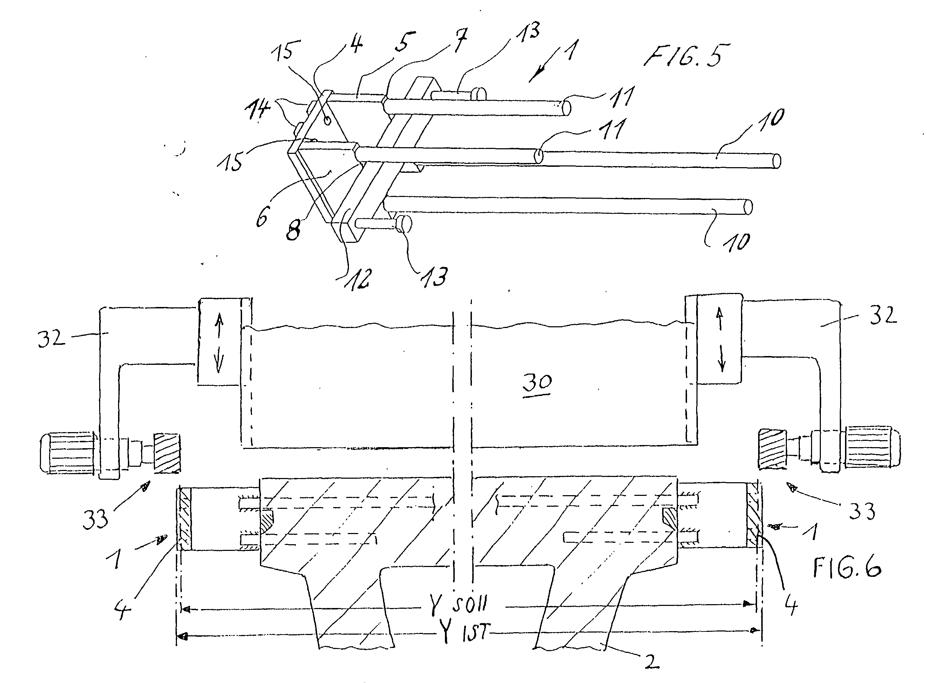

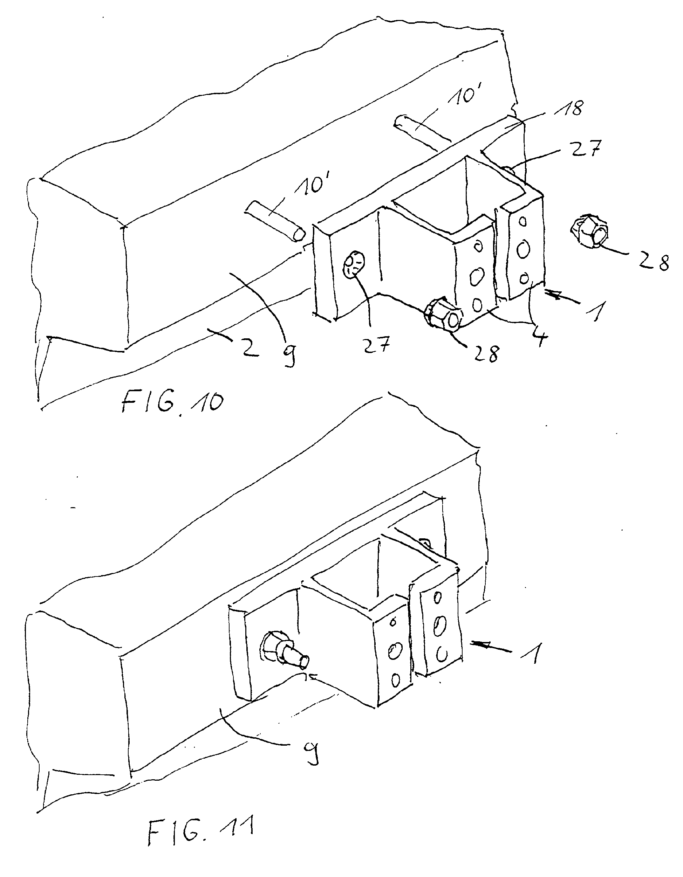

Wie aus Figur 5 ersichtlich ist, weist die Konsole 1 dieses Ausführungsbeispieles einen im wesentlichen u-förmig gestalteten Querschnitt mit der Kopfplatte 4 und zwei im wesentlichen parallel zueinander gerichteten Stegblechen 5, 6 auf, die quer zur Kopfplatte gerichtet sind. Die Kopfplatte 4, die seitlich über die Stegbleche 5, 6 überstehen kann und die Stegbleche 5, 6 sind, beispielsweise mittels entsprechender Schweißnähten, fest miteinander verbunden. Die freien Enden 7, 8 der Stegbleche 5, 6 liegen an der Einbaulage der Konsole 1 an der Seitenwand 9 (vergl. Figur 9) des Trägers 2 an.

Im Bereich der freien Enden 7, 8 sind an den Stegblechen 5, 6 als Befestigungsmittel für die jeweilige Konsole 1 dienende Zuganker 10, 11 vorgesehen, die mittels Schweißnähten an den Stegblechen 5, 6 befestigt sind. Die Zuganker 10, 11 können, wie im Ausführungsbeispiel gezeigt, an den Stirnseiten der Stegbleche 5, 6 oder aber an deren Seitenflächen befestigt sein. Die in der Einbaulage der Konsole 1 oberen Zuganker 10 sind länger ausgebildet als die in der Einbaulage unteren Zuganker 11. Die Zuganker 10, 11 dienen dazu die aus der Belastung der Konsole 1 entstehenden axiale Kräfte aufzunehmen.

Beim gezeigten Ausführungsbeispiel sind die Zuganker 10, 11 mit der Konsole 1 fest verbunden. Die Zuganker 10, 11 können aber auch als separate Elemente ausgebildet sein, wobei sie durch den gesamten Betonquerschnitt verlaufen. Im Fall einer Bauweise mit separaten Zugankern können die Konsolen 1 auch durch externe Vorspannung an den Betonträger 2 angespannt werden (siehe Figur 9 - 16).

Die Knagge 12 und die Kopfbolzen 13 sind ebenfalls mit de Stegblechen 5, 6 verbunden, um entstehende Vertikalkräfte aufzunehmen.

Der erfindungsgemäße modulare Aufbau gestattet es auch die Konsolen 1 unabhängig von der Schalung für den Träger 2 zunächst an einer separaten Hilfskonstruktion zu befestigen, wobei die Konsolen in Langlöcher der Hilfskonstruktionen x-, y- und z-Richtung variabel eingemessen und positioniert werden können. Hierdurch ist gewährleistet, daß die für die Tragelemente 3 benötigte Raumkurve unabhängig von der Form und Genauigkeit des Trägers 2 abgebildet werden kann.

Die für die Lage der Tragelemente 3 relativ engen Toleranzen können durch mechanische Bearbeitung beispielsweise von Vorsprüngen 14 der Kopfplatte 4 und von Bohrungen 15 an den Konsolen 1 hergestellt werden.

In Figur 6 ist skizziert die Bearbeitung der Konsolen 1 dargestellt. Hierzu ist ein Fahrzeug 30 oberhalb des Trägers 2 beispielsweise in nicht dargestellten Schienen geführt. Das Fahrzeug 30 vermisst den Abstand der Außenflächen der Kopfplatten 4 der Konsolen 1 und stellt dabei einen Wert yₗₛₜ fest. Durch ein Verfahren eines Fräsers 33, welcher an einem Arm 32 des Fahrzeuges 30 angeordnet ist, werden die Koordinaten für einen y_{Soll}-Wert, welcher an den Konsolen 1 anliegen soll, eingestellt. Anschließend wird durch ein Absenken des Armes 2 in dem Bereich der Konsolen 1 die Kopfplatte 4 soweit abgearbeitet, bis das Maß y_{Soll} erreicht ist. Zum Vermessen des Abstandes y_{Soll} bzw. -_{Ist} wird das Fahrzeug 30 auf bestimmte Referenzpunkte, Linien oder Flächen eingestellt. Hierdurch wird beispielsweise erreicht, daß zur Mittelachse des Trägers 2 die Kopfplatten 4 symmetrisch nach dem Abarbeiten angeordnet sind und nicht aus der Mittellinie laufen.

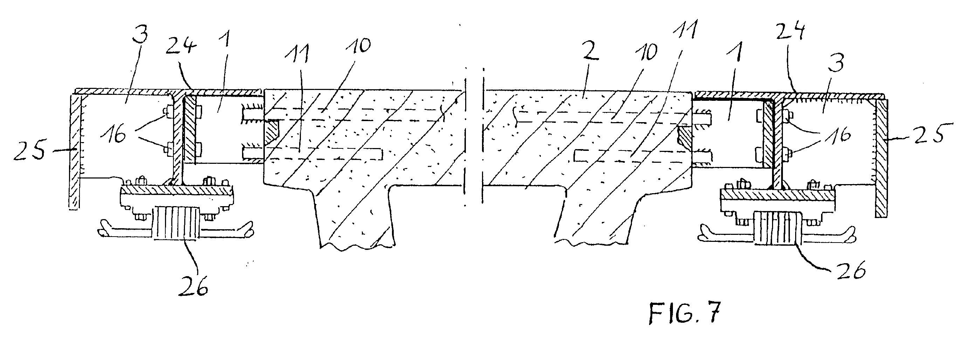

Figur 7 zeigt den Träger 2 mit jeweils einer Konsole 1 und daran angeordneten Anbauteilen 3. Die Konsole 1 ist mit den Zugankern 10 und 11 in dem Träger 2 verankert. Die Konsole 1 weist jeweils eine obere Absetzfläche 24, eine Seitenführungsfläche 25 und ein Statorpaket 26 auf. Das Statorpaket 26 ist an einer entsprechenden Befestigungsfläche des Anbauteils 3 angeordnet. Das Anbauteil 3 ist im wesentlichen kastenförmig ausgebildet, wodurch eine sehr kompakte und stabile Bauweise erzielt wird. Das Anbauteil 3 ist mittels Schrauben 16 an der Konsole 1 befestigt. Im Falle einer Beschädigung des Anbauteils 3 oder des Trägers 2 können Anbauteil 3 und Träger 2 voneinander mittels dieser Schraubverbindung entfernt werden.

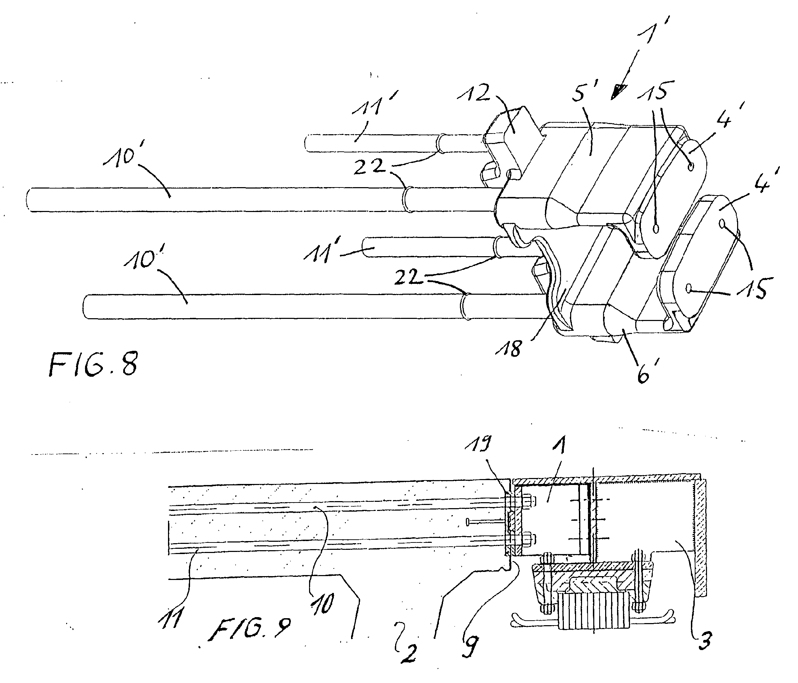

Figur 8 zeigt ein anderes Ausführungsbeispiel einer Konsole 1'. Die Konsole 1' ist im wesentlichen ein Gußteil, beispielsweise Sphäroguß GGG 50. Als Gußteil besteht der wesentliche Vorteil, daß die Formgebung je nach den Funktionserfordernissen gewählt werden kann. So kann insbesondere in Abhängigkeit der auftretenden Kräfte unterschiedliche Wanddicke gewählt werden. Außerdem kann in den Bereichen, in welchen Material abgetragen oder aufgetragen werden soll, eine entsprechende Wanddicke vorgesehen sein. Die Konsole 1' weist Stege 5' und 6' auf, welche insbesondere an ihren Fußpunkten eine stärkere Wandstärke haben als im Kopfbereich. Die Fußpunkte sind mit einer Fußplatte 18 verbunden. Die Kopfplatte 4' ist zweigeteilt. An jedem Steg 5', 6' ist eine Kopfplatte 4' angeordnet, ohne die Stege 5', 6' zu verbinden. Die Festigkeit der Konsole wird durch die Fußplatte 18 sowie eine ebenfalls vorgesehene Knagge 12 erhalten. Die Kopfplatte 4' weist Bohrungen 15 auf, an welchen das Anbauteil angeschraubt werden soll. Die Kopfplatte 4' ist so ausgebildet, daß sie abgefräst oder durch Schweißen Material aufgetragen werden kann. Der Materialauftrag kann auch durch Einlegen von Scheiben oder Platten bzw. Verschweißen dieser Teile mit der Kopfplatte 4' erfolgen. Die offene Gestaltung der Kopfplatte 4' weist wesentliche Vorteile am Stoß von Anbauteilen 3 auf. Hierbei wird beispielsweise die Kopfplatte 4', welche mit dem Steg 5' verbunden ist, mit dem ersten Anbauteil verbunden, während die Kopfplatte 4' des Stegs 6' mit dem zweiten Anbauteil verbunden wird. Hierdurch sind durch Temperaturschwankungen auftretende Längenänderungen der Anbauteile problemlos ausgleichbar.

Das Gußteil der Konsole 1' weist Fortsätze auf, welche mit Zugankern 10' und 11' verbunden sind. Die Verbindung erfolgt beispielsweise mittels Schweißen, wodurch eine Schweißnaht 22 entsteht. Hierdurch wird einerseits das Gießen der Konsole 1' erleichtert. Andererseits wird die Zugbeanspruchung der Zugstäbe 10' und 11' besser mit Stahlstäben erzielt. Durch dieses Verbundsystem wird auf die einzelnen Erfordernisse der Bauteilbeanspruchungen optimal eingegangen. Der beim Verschweißen der Zugstäbe 10' und 11' mit den Fortsätzen der Konsole 1' entstehenden Wulste der Schweißnaht 22 werden vorteilhafterweise nicht abgearbeitet und sorgen somit innerhalb des Betons gleichzeitig für einen besseren Formschluß der Konsole 1' in dem Träger 2.

Bei dem Ausführungsbeispiel der Figur 9 ist die Konsole 1 mittels durch den oberen Gurt des Trägers 2 durchgehenden Zugstäben 10 und 11 befestigt. Die Zugstäbe 10 und 11 sind Gewindestäbe aus Stahl, welche die Konsole 1 sowie die ihr korrespondierende, dem Träger 2 gegenüberliegende Konsole 1 miteinander verbinden. In dem Träger 2 können hierfür nicht dargestellte Leerrohre einbetoniert sein, durch welche die Gewindestäbe 10 und 11 hindurchgesteckt und anschließend die Konsolen 1 miteinander verschraubt werden. Zum Abstützen der Konsolen 1 können Anschlagplatten 19 an der Seitenwand 9 des Trägers 2 einbetoniert sein, um ein gutes Abstützen der Konsole 1 an dem Träger 2 zu gewährleisten. Zum Einstellen können zwischen der Anschlagplatte 19 und der Konsole 1 Distanzstücke eingelegt werden.

Figur 10 zeigt einen Ausschnitt eines Trägers 2. Aus der Seitenwand 9 stehen Zuganker 10' hervor. Auf die Zuganker 10' wird die Konsole 1 mit ihrer Fußplatte 18 aufgesteckt. In der Fußplatte 18 sind Zentrierbohrungen 27 angeordnet, welche mit Zentriermuttern 28 korrespondieren. In montiertem Zustand wird, gemäß Figur 11, die Konsole 1 an die Seitenwand 9 fest angeschraubt. Durch die Zentrierung der Mutter 28 in der Bohrung 27 wird eine feste Verbindung der Konsole 1 mit dem Träger 2 geschaffen.

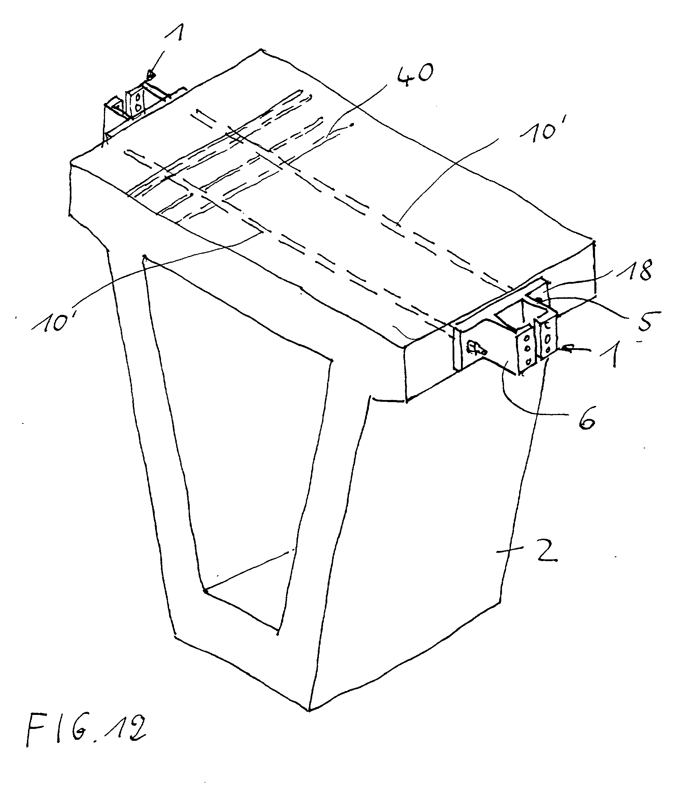

In einem Ausführungsbeispiel gemäß Figur 12 ist an einem Träger 2 jeweils eine Konsole 1 beidseitig des oberen Gurtes des Trägers 2 angeordnet. Die Zugstäbe 10' verbinden die beiden Konsolen 1 miteinander. Die Konsolen 1 werden an den Zugstäben 10' befestigt, in dem eine Mutter auf den als Gewindestab ausgebildeten Zugstab 10' aufgeschraubt wird. Die Konsolen 1 werden somit an den oberen Gurt des Trägers 2 angepreßt und miteinander verspannt. Die Konsole 1 weist dabei eine Fußplatte 18 auf, welche die Stege 5, 6 miteinander verbindet und außerdem Bohrungen beinhaltet zur Aufnahme der Zuganker 10' und der entsprechenden Mutter zum Verschrauben der Konsole 1.

Die Zuganker 10' verlaufen vorzugsweise zwischen Ebenen, in welchen Bewährungseisen 40 verlegt sind. Hierdurch wird eine besonders hohe Festigkeit erzielt. Alternativ kann hierfür auch Faserbeton verwendet werden, um auch in Randbereichen eine hohe Festigkeit des Trägers 2 zu erlangen.

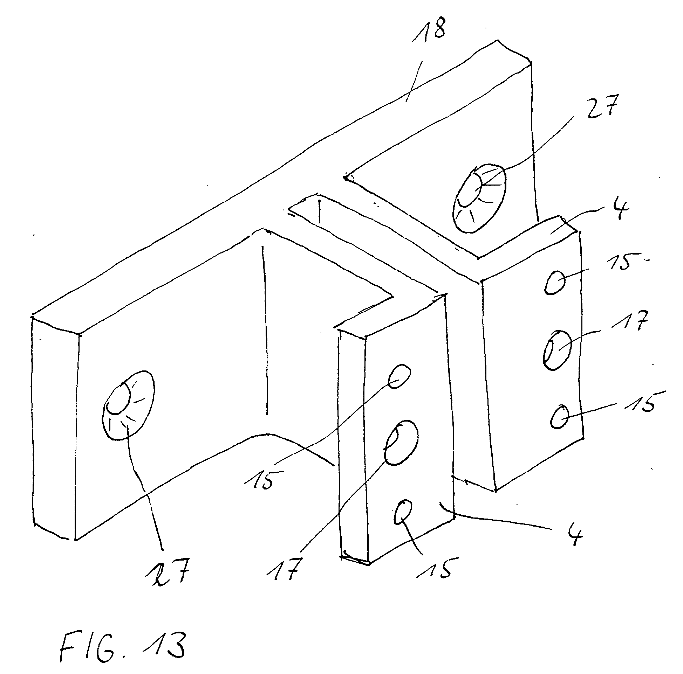

In Figur 13 ist ein weiteres Ausführungsbeispiel einer Konsole 1 dargestellt. Die Ausführung entspricht weitgehend der Konsole 1 gemäß Figur 12. Die Stege 5, 6 sind jedoch näher aneinander angeordnet. Die Kopfplatten 4 sind voneinander weggerichtet. Diese Ausführung hat u.a. den Vorteil, daß sie eine leichtere Zugänglichkeit zu den Befestigungselementen der Anbauteile 3 haben. Die Schrauben, welche durch die Bohrungen 15 hindurchgeführt werden, sind von Außen leichter zugänglich und somit auch mit Werkzeugmaschinen leichter zu bedienen.

In der Fußplatte 18 sind Zentrierbohrungen 27 angeordnet. Durch das Zusammenwirken mit Zentriermuttern zum Befestigen an den Zentrierstäben 10' gemäß Figur 12 wird somit eine sehr exakte Positionierung der Konsole 1 an dem Träger 2 erzielt Darüber hinaus wird eine hohe Festigkeit der Schraubverbindung erreicht.

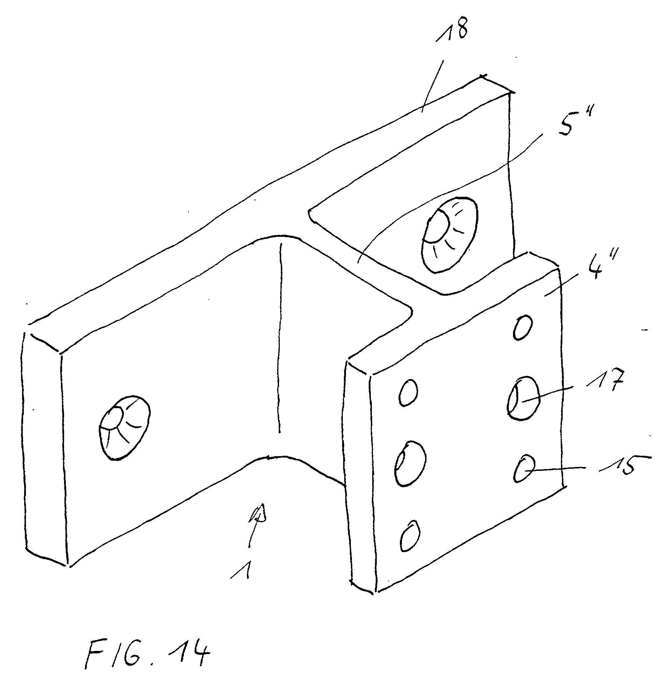

In Figur 14 ist ein weiteres Ausführungsbeispiel einer Konsole 1 dargestellt. Hierbei ist lediglich ein einziger Steg 5'' an der Fußplatte 18 befestigt. An dem Steg 5'' ist an seinem anderen Ende eine einzige Kopfplatte 4'' angeordnet, welche Bohrungen 15 und 17 für ein Anbauteil aufweist. In manchen Ausführungen ist diese Gestaltung der Konsole 1 ausreichend, auch wenn im allgemeinen die Ausführung mit zwei Stegen und zwei Kopfplatten als derzeit vorteilhafteste Ausführung betrachtet wird.

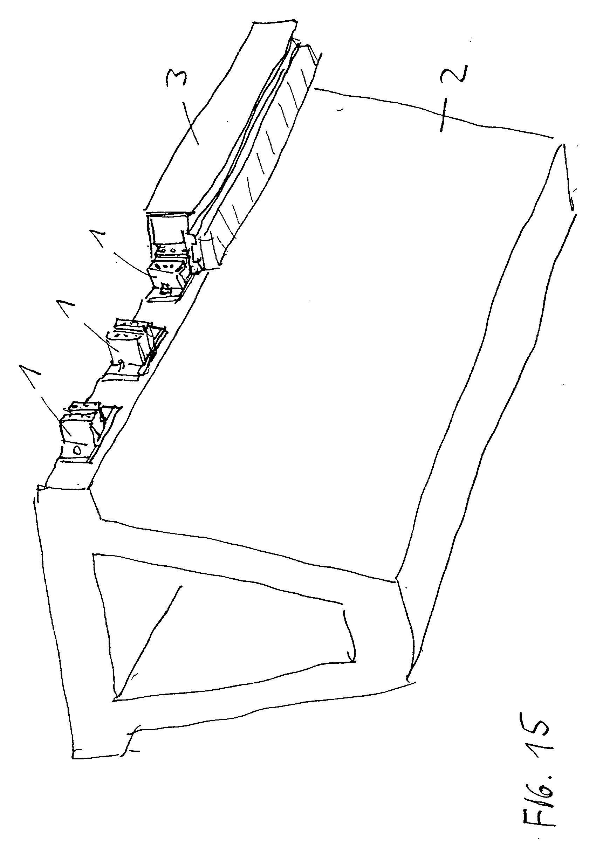

In Figur 15 ist in perspektivischer Ansicht ein Ausschnitt eines Trägers 2 mit mehreren Konsolen 1 dargestellt. Ein Anbauteil 3 ist an Konsolen befestigt. Aus dieser Darstellung ist ersichtlich, daß das Ende des Anbauteils 3 an einer Kopfplatte einer Konsole 1 endet. Das noch nicht angebaute folgende Anbauteil wird auf die zweite Kopfplatte der Konsole 1 aufgeschraubt. Durch die geschlitzte Bauweise der Kopfplatte 4 wird somit eine Längenausdehnung der Anbauteile in begrenztem Maße zugelassen.

Die vorliegende Erfindung ist nicht auf die dargestellten Ausführungsbeispiele beschränkt. Insbesondere Kombinationen der einzelnen Merkmale sind jederzeit ohne den Rahmen der Erfindung zu verlassen möglich.

## Patentansprüche

1. Verfahren zum Herstellen einer lagegenauen Verbindung an einem Fahrweg für ein spurgebundenes Fahrzeug, insbesondere eine Magnetschwebebahn, zwischen einem Träger (2) und wenigstens einem Anbauteil (3) zum Führen des Fahrzeuges, indem mehrere Trägerelemente zur Bildung des Fahrweges vor Ort im wesentlichen positionsgerecht in Bezug auf die gesamte Fahrbahn aufgestellt werden, **dadurch gekennzeichnet, daß** eine mit einer Kopfplatte (4) und einer Fußplatte (18) versehene Konsole (1) zwischen dem Träger (2) und dem Anbauteil (3) angeordnet wird und Verbindungsstellen zwischen Träger (2) und Konsole (1) und/oder zwischen Konsole (1) und Anbauteil (3) vermessen werden und das geforderte Maß hergestellt wird, indem vor Ort Material an der Verbindungsstelle abgetragen oder aufgebaut wird und anschließend das Anbauteil (3) montiert wird.

2. Verfahren nach Anspruch 1, **dadurch gekennzeichnet, daß** die Vermessung mittels eines spurgebundenen Fahrzeuges (30) durchgeführt wird.

3. Verfahren nach einem der vorherigen Ansprüche, **dadurch gekennzeichnet, daß** das Material spanend, insbesondere durch Fräsen oder Bohren, abgetragen wird.

4. Verfahren nach einem der vorherigen Ansprüche, **dadurch gekennzeichnet, daß** das Material aufgeschweißt wird.

5. Verfahren nach einem der vorherigen Ansprüche, **dadurch gekennzeichnet, daß** zusätzliches Material, insbesondere eine Scheibe oder Distanzplatte an der Bearbeitungsfläche als Abstandsstück angeordnet wird.

6. Verfahren nach einem der vorherigen Ansprüche, **dadurch gekennzeichnet, daß** die Vermessung und Bearbeitung nach Beendigung des Verformungsvorganges des Trägers (2) sowie der Lagerung des Trägers (2) durchgeführt wird.

7. Verfahren nach einem der vorherigen Ansprüche, **dadurch gekennzeichnet, daß** die Vermessung ausgehend von Referenzpunkten, -linien oder-ebenen erfolgt.

8. Fahrweg für ein spurgebundenes Fahrzeug, insbesondere eine Magnetschwebebahn, mit einem aus mehreren Elementen bestehenden Träger (2) und einem Anbauteil (3), **dadurch gekennzeichnet, daß** der Fahrweg mit einer Konsole (1) versehen ist, mit welcher der Träger (2) mit dem Anbauteil (3) verbunden ist und welche wenigstens einen an seinem ersten Ende mit einer Fußplatte (18) zur Verbindung mit dem Träger (2) vorgesehenen Steg (5";5,6) aufweist und daß der Steg (5";5,6) an seinem zweiten Ende eine im wesentlichen senkrecht zur Erstreckung des Steges (5";5,6) angeordnete Kopfplatte (4) zur Verbindung mit dem Anbauteil (3) aufweist, und daß an zumindest einer Verbindungsstelle zwischen Träger (2) und Konsole (1) und/oder zwischen Konsole (1) und Anbauteil (3) bearbeitbare Anlageflächen zum Abtragen oder Aufbauen von Material vorgesehen sind zum Herstellen einer lagegenauen Verbindung zwischen Träger (2) und Konsole (1) und/oder zwischen Konsole (1) und Anbauteil (3).

9. Fahrweg nach dem vorherigen Anspruch, **dadurch gekennzeichnet, daß** die Stege (5,6) an ihrem ersten und/oder ihrem zweiten Ende miteinander verbunden sind.

10. Fahrweg nach einem der vorherigen Ansprüche, **dadurch gekennzeichnet, daß** der Steg (5,6) und/oder die Kopfplatte (4) Bohrungen oder Gewinde zur Aufnahme von Befestigungsschrauben und/oder Querkraftbolzen für die Anbauteile (3) aufweist.

11. Fahrweg nach einem der vorherigen Ansprüche, **dadurch gekennzeichnet, daß** die Konsole (1) in den Träger (2) mit an der Konsole (1) angeordneten Zugankern (10,11) einbetoniert ist.

12. Fahrweg nach einem der vorherigen Ansprüche, **dadurch gekennzeichnet, daß** die Konsole (1) aus Guß und der Zuganker (10,11) zumindest teilweise aus Stahl ist, und daß der Zuganker (10,11) und die Konsole (1) miteinander verschweißt sind.

13. Fahrweg nach einem der vorherigen Ansprüche, **dadurch gekennzeichnet, daß** die Konsole (1) an dem Träger (2), insbesondere an einem in dem Träger (2) angeordneten Zuganker (10,11) angeschraubt ist.

14. Fahrweg nach einem der vorherigen Ansprüche, **dadurch gekennzeichnet, daß** jeweils zwei Konsolen (1) beidseitig des Trägers (2) mit mindestens einem Zuganker (10,11) zu einer Baueinheit zusammengefaßt sind.

15. Fahrweg nach einem der vorherigen Ansprüche, **dadurch gekennzeichnet, daß** der Zuganker (10,11) eine Gewindestange ist.

16. Fahrweg nach einem der vorherigen Ansprüche, **dadurch gekennzeichnet, daß** die Fußplatte (18) Bohrungen, insbesondere Zentrierbohrungen zur Befestigung an einem Zuganker (10,11) aufweist.

17. Fahrweg nach einem der vorherigen Ansprüche, **dadurch gekennzeichnet, daß** die Fußplatte (18) in den Träger (2) einbetoniert ist.

18. Fahrweg nach einem der vorherigen Ansprüche, **dadurch gekennzeichnet, daß** der Abstand zweier Konsolen (1) in Längsrichtung des Fahrweges im wesentlichen ein ganzzahliger Teil der Länge des Anbauteiles (3) ist.

19. Fahrweg nach einem der vorherigen Ansprüche, **dadurch gekennzeichnet, daß** am Stoß zweier Anbauteile (3) eine einzige Konsole (1) diese zwei Anbauteile (3) mit dem Träger (2) verbindet, wobei das erste Anbauteil (3) mit dem ersten Steg (5,6) bzw. der ersten Kopfplatte (4) und das zweite Anbauteil (3) mit dem zweiten Steg (5,6) bzw. der zweiten Kopfplatte (4) verbunden ist.

20. Fahrweg nach einem der vorherigen Ansprüche, **dadurch gekennzeichnet, daß** das Anbauteil (3) ein im Querschnitt im wesentlichen kastenförmiges Bauteil mit integrierter Absetzfläche (24), Seitenführungsfläche (25) und Stator-Befestigung ist.

21. Fahrweg nach einem der vorherigen Ansprüche, **dadurch gekennzeichnet, daß** die Konsole (1) an einem aus Faserbeton hergestellten Träger (2) angeordnet ist.

## Claims

1. A method for the fabrication of an accurately positioned joint on a travel-way for a rail-borne vehicle, in particular a magnetic levitation rail, between a carrier (2) and at least one mounted component (3) for guiding the vehicle, in which, in order to create the travel-way, a number of carriers are placed at the place of assembly in substantially the correct positions with respect to the travel-way as a whole, wherein a bracket (1) having a header plate (4) and a sole plate (18) is positioned between the carrier (2) and the mounted component (3), and in which the location of the joint between the carrier (2) and the bracket (1) and/or between the bracket (1) and the mounted component (3) is measured, and the required dimension is achieved through removing or adding material at the location of the joint, after which the mounted component (3) is fitted.

2. A method according to Claim 1 wherein a measurement is carried out with the aid of a rail-borne vehicle (30).

3. A method according to one of the foregoing claims wherein the material is removed by cutting techniques, in particular by milling or drilling.

4. A method according to one of the foregoing claims wherein the additional material is welded on.

5. A method according to one of the foregoing claims wherein additional material, in particular a sheet or spacing plate, is positioned on the surface that is worked to act as a distance plate.

6. A method according to one of the foregoing claims wherein the measurement and mechanical processing are carried out after the carrier (2) has been shaped and the carrier (2) has been bedded.

7. A method according to one of the foregoing claims wherein the measurement is carried out on the basis of reference points, reference lines or reference planes.

8. A travel-way for a rail-borne vehicle, in particular a magnetic levitation rail, having a carrier (2) consisting of a number of elements and a mounted component (3) wherein the travel-way is provided with a bracket (1) with which the carrier (2) is connected to the mounted component (3), and which has at least one web (5";5,6) that has a sole plate (18) for connecting to the carrier (2) at its first end, and the web (5";5,6) has, at its second end, a header plate (4) positioned substantially perpendicular to the length of the web (5";5,6) for connection to the mounted component (3), and supporting faces that can be mechanically processed are provided on at least one connecting location between the carrier (2) and the bracket (1) and/or between the bracket (1) and the mounted component (3), from which material can be removed or to which it can be added in order to create an accurately positioned joint between the carrier (2) and the bracket (1) and/or between the bracket (1) and the mounted component (3).

9. A travel-way in accordance with the foregoing claim, wherein the webs (5, 6) are joined together at their first and/or second ends.

10. A travel-way in accordance with one of the foregoing claims, wherein the web (5, 6) and/or the header plate (4) have holes or threads to mate with fastening bolts and/or bolts to accept the transverse forces for the mounted components (3).

11. A travel-way in accordance with one of the foregoing claims, wherein the bracket (1) is concreted into the carrier (2) by means of tie-rods (10, 11) located on the bracket (1).

12. A travel-way in accordance with one of the foregoing claims, wherein the bracket (1) is manufactured of cast iron and in which the tie-rod (10, 11) consist at least in part of steel, and where the tie-rod (10, 11) and the bracket (1) are welded together.

13. A travel-way in accordance with one of the foregoing claims, wherein the bracket (1) is bolted to the carrier (2), in particular by means of a tie-rod (10, 11) located on the carrier (2).

14. A travel-way in accordance with one of the foregoing claims, wherein two brackets (1) on both sides of the carrier (2) are combined into one structural unit by means of at least one tie-rod (10, 11).

15. A travel-way in accordance with one of the foregoing claims, wherein the tie-rod (10, 11) is a threaded bar.

16. A travel-way in accordance with one of the foregoing claims, wherein the sole plate (18) has boreholes, in particular centring boreholes for fastening to a tie-rod (10, 11).

17. A travel-way in accordance with one of the foregoing claims, wherein the sole plate (18) is concreted into the carrier (2).

18. A travel-way in accordance with one of the foregoing claims, wherein the distance between two brackets (1) in the longitudinal direction of the travel-way is, largely speaking, an integral fraction of the length of the mounted component (3).

19. A travel-way in accordance with one of the foregoing claims, wherein at the place where two mounted components (3) meet, a single bracket (1) connects these two mounted components (3) to the carrier (2), the first attached piece (3) beeing joined to the first web (5, 6) or the first header plate (4), and the second mounted component (3) beeing joined to the second web (5, 6) or the second header plate (4).

20. A travel-way in accordance with one of the foregoing claims, wherein the mounted component (3) is a component having a cross-section substantially that of a box, having an integrated resting surface (24), lateral guide surface (25) and stator fastening.

21. A travel-way in accordance with one of the foregoing claims, wherein the bracket (1) is located on a carrier (2) manufactured from fibre concrete.

## Revendications

1. Procédé pour la réalisation d'un raccordement à position exacte à une voie de circulation pour un véhicule guidé, particulièrement un train à suspension magnétique, entre un support (1) et au moins une pièce rapportée (3) servant au guidage du véhicule, ledit raccordement étant réalisé en ce sens que pour la constitution de la voie de circulation, plusieurs éléments porteurs sont dressés au chantier de construction essentiellement à la bonne position par rapport à l'ensemble de la voie de circulation, **caractérisé en ce qu'**une console (1) dotée d'une plaque supérieure (4) et d'une plaque d'assise (18) est disposé entre le support (2) et la pièce rapportée (3) et que les points de raccordement entre le support (2) et la console (1) et/ou entre la console (1) et la pièce rapportée (3) sont mesurées et que la cote exigée est créée en ce sens que du matériau est enlevé ou accumulé sur place au point de raccordement et qu'ensuite la pièce rapportée (3) est montée.

2. Procédé selon la revendication 1, **caractérisé en ce que** la mensuration est effectuée au moyen d'un véhicule guidé (30).

3. Procédé selon l'une quelconque des revendications précédentes, **caractérisé en ce que** la matière est enlevée par enlèvement des copeaux à sec, particulièrement par fraisage ou alésage.

4. Procédé selon l'une quelconque des revendications précédentes, **caractérisé en ce que** la matière est accumulée par soudage.

5. Procédé selon l'une quelconque des revendications précédentes, **caractérisé en ce qu'**une matière supplémentaire, particulièrement un disque ou une plaque d'espacement, est disposé à la surface d'usinage comme pièce d'espacement.

6. Procédé selon l'une quelconque des revendications précédentes, **caractérisé en ce que** la mensuration et l'usinage s'effectuent après la fin de la procédure de formage du support (2) ainsi que de scellement dudit support (2).

7. Procédé selon l'une quelconque des revendications précédentes, **caractérisé en ce que** la mensuration s'effectue à partir des points de référence, des lignes de référence ou des plans de référence.

8. Voie de circulation pour un véhicule guidé, particulièrement un train à suspension magnétique, avec un support (2) se composant de plusieurs éléments et une pièce rapportée (3), **caractérisé en ce que** la voie de circulation comporte une console (1), par laquelle le support (2) est raccordé à la pièce rapportée (3) et laquelle console (1) comporte au moins une traverse (5";5,6) prévue en sa première extrémité avec une plaque d'assise (18) pour le raccordement avec le support (2), **en ce que** la traverses (5";5,6), en sa deuxième extrémité, comporte une plaque supérieure (4) s'étendant essentiellement dans le sens perpendiculaire à la traverses (5";5,6) pour le raccordement avec la pièce rapportée (3), et **en ce que**, à un point de connexion au moins entre le support (2) et la console (1) et/ou entre la console (1) et la pièce rapportée (3), des surfaces de contact usinables sont prévues pour l'enlèvement ou l'accumulation de matière en vue de la réalisation d'une connexion à position exacte entre le support (2) et la console (1) et/ou entre la console (1) et la pièce rapportée (3).

9. Voie de circulation selon la revendication de brevet précédente, **caractérisée en ce que** les traverses (5,6) sont connectées l'une à l'autre entre leur première et/ou en leur deuxième extrémité.

10. Voie de circulation selon l'une quelconque des revendications précédentes, **caractérisée en ce que** la traverse (5,6) et/ou la plaque supérieure (4) comporte(nt) des alésages ou des filetages pour accueillir des vis de fixation et/ou des boulons à force transversale pour les pièces rapportées (3).

11. Voie de circulation selon l'une quelconque des revendications précédentes, **caractérisée en ce que** la console (1) est enrobée en béton dans le support (2) par des tirants d'ancrage (10,11) disposés à la console.

12. Voie de circulation selon l'une quelconque des revendications précédentes, **caractérisée en ce que** la console (1) en réalisée en fonte et le tirant d'ancrage (10,11) au moins partiellement en acier, et que le tirant d'ancrage (10,11) et la console (1) sont soudés l'un à l'autre.

13. Voie de circulation selon l'une quelconque des revendications précédentes, **caractérisée en ce que** la console (1) est visée au support (2), particulièrement à un tirant d'ancrage (10,11) disposés au support (2).

14. Voie de circulation selon l'une quelconque des revendications précédentes, **caractérisée en ce que** deux consoles (1) respectivement, sur les deux côtés du support (2), sont regroupés avec au moins un tirant d'ancrage (10,11) en une unité de construction.

15. Voie de circulation selon l'une quelconque des revendications précédentes, **caractérisée en ce que** le tirant d'ancrage (10,11) est une tige filetée.

16. Voie de circulation selon l'une quelconque des revendications précédentes, **caractérisée en ce que** la plaque d'assise (18) comporte des alésages, particulièrement des trous de centrage pour la fixation à un tirant d'ancrage (10,11).

17. Voie de circulation selon l'une quelconque des revendications précédentes, **caractérisée en ce que** la plaque d'assise (18) est enrobée en béton dans le support (2).

18. Voie de circulation selon l'une quelconque des revendications précédentes, **caractérisée en ce que** la distance entre deux consoles (1) dans le sens longitudinal de la voie de circulation est essentiellement une partie entière de la longueur de la pièce rapportée (3).

19. Voie de circulation selon l'une quelconque des revendications précédentes, **caractérisée en ce que**, à l'emplacement de joint entre deux pièces rapportées (3), une seule console (1) connecte ces deux pièces rapportées (3) avec le support (2), sachant que la première pièce rapportée (3) est connectée à la première traverse (5,6) ou à la première plaque supérieure (4) et que la deuxième pièce rapportée (3) est connectée à la deuxième traverse (5,6) ou à la deuxième plaque supérieure (4).

20. Voie de circulation selon l'une quelconque des revendications précédentes, **caractérisée en ce que** la pièce rapportée (3) est un élément de construction essentiellement en forme de caisse avec surface de dépose (24), surface de guidage latérale (25) et fixation de stator intégrées.

21. Voie de circulation selon l'une quelconque des revendications précédentes, **caractérisée en ce que** la console (1) est disposée à un support (2) réalisé en fibrobéton.
